(19) Europäisches Patentamt
European Patent Office
Office européen des brevets

(11) **EP 4 086 305 A1**

(12) **EUROPÄISCHE PATENTANMELDUNG**

(43) Veröffentlichungstag:
**09.11.2022   Patentblatt 2022/45**

(21) Anmeldenummer: **21207134.4**

(22) Anmeldetag: **09.11.2021**

(51) Internationale Patentklassifikation (IPC):
**C08K 11/00** *(2006.01)*     **C08L 97/02** *(2006.01)*
**C04B 18/24** *(2006.01)*     **C04B 26/02** *(2006.01)*
**B29C 39/02** *(2006.01)*     **B29C 67/24** *(2006.01)*
**B29C 70/60** *(2006.01)*

(52) Gemeinsame Patentklassifikation (CPC):
(C-Sets verfügbar)
**B29C 70/58; B29C 39/02; B29C 67/24;**
**C04B 26/06; C04B 26/12; C04B 26/14;**
**C04B 26/18; C08K 11/005; C08L 97/02;**
B29K 2511/00                              (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **03.05.2021   DE 102021111384**

(71) Anmelder: **Schock GmbH**
**94209 Regen (DE)**

(72) Erfinder:
• **Achatz, Oskar**
  **94253 Bischofsmais (DE)**
• **Orendorz, Adam**
  **94227 Zwiesel (DE)**
• **Datsyuk, Vitaliy**
  **94227 Zwiesel (DE)**
• **Reichenberger, Roland**
  **94209 Regen (DE)**

(74) Vertreter: **Lindner Blaumeier**
**Patent- und Rechtsanwälte**
**Partnerschaftsgesellschaft mbB**
**Dr. Kurt-Schumacher-Str. 23**
**90402 Nürnberg (DE)**

(54)   **AUSHÄRTBARE GIESSMASSE, DARAUS HERGESTELLTER FORMKÖRPER UND VERFAHREN ZUR HERSTELLUNG DES FORMKÖRPERS**

(57)   Aushärtbare Gießmasse, mit einem polymeren Bindemittel und wenigstens einem darin eingebrachten, partikulärem Füllstoff, wobei der Füllstoff gemahlene Fruchtkerne und/oder Fruchtschalen sind, wobei entweder nur der wenigstens eine Füllstoff aus gemahlenen Fruchtkernen und/oder Fruchtschalen oder zusätzlich wenigstens ein weiterer partikulärer anorganischer Füllstoff enthalten ist.

(52) Gemeinsame Patentklassifikation (CPC): (Forts.)

C-Sets
**C04B 26/14, C04B 14/022, C04B 14/06,**
**C04B 14/30, C04B 14/305, C04B 14/307,**
**C04B 14/308, C04B 14/34, C04B 18/248,**
**C04B 24/2641**

**Beschreibung**

Die Erfindung betrifft eine aushärtbare Gießmasse, mit einem polymeren Bindemittel und wenigstens einem darin eingebrachten, partikulärem Füllstoff.

Typischerweise können aushärtbare Gießmassen bzw. duroplastische Formmassen, wie sie z.B. für die Herstellung von Küchenspülen und Sanitärkeramik verwendet werden, auf unterschiedliche Weise oder mit unterschiedlichen Gießmassenzusammensetzungen hergestellt werden. Verschiedene Möglichkeiten sind z.B. in DE 38 32 351 A1, DE 10 2004 055 365 A1 oder DE 10 2019 125 777.8 beschrieben. Bei all diesen Gießmassen handelt es sich um füllstoffhaltige polymerisierte Massen auf Basis von Monomeren und anorganischen Füllstoffen.

Die polymerisierbaren Massen nach DE 38 32 351 A1 bestehen beispielsweise aus 74 bis 76 Gew.-% kristallinem Quarzsand, 24 bis 26 Gew.-% einer Lösung von Polymethylmethacrylat in Methylmethacrylat, wobei der Anteil an Polymethylmethacrylat in dieser Lösung 18 bis 25 % beträgt, 1,2 Gew.-% (bezogen auf das Harz) eines Peroxids, Hilfsstoffen und 2 Gew.-% eines Vernetzungsmittels.

Die aus der DE 10 2004 055 365 A1 bekannte Gießmasse unterscheidet sich von der früheren Gießmasse durch den Anteil des Vernetzers, der extrem erhöht ist. Der Anteil des Vernetzers liegt bei mindestens 10 Gew.-%, bezogen auf den Anteil des Monomers in der Binderlösung. Durch die Verwendung des kristallinen Quarzsandes wird eine Ähnlichkeit mit der bisherigen Zusammensetzung hergestellt. Die Patentanmeldung DE 10 2019 1251777.8 beschreibt ein Formkörper aus Quarzkomposit und aus biobasierten Monomeren und Vernetzern, die den Carbon Footprint stark reduzieren. Die Verwendung des Quarzsandes ist in der Rezeptur jedoch noch in einem Anteil der Füllstoffpartikel bezogen auf die Masse der Gießmasse von 40-85% dargestellt. Es können also prinzipiell unterschiedliche Gießmassen zur Herstellung der Formteile verwendet werden. Die Gießmassen unterscheiden sich primär im polymeren Binderanteil.

Im zwanzigsten Jahrhundert wurde der Anstieg des Verbrauchs natürlicher Ressourcen in der Bau- und Verkehrsinfrastruktur um den Faktor 23 beobachtet (Krausmann et al., Proc. Natl. Acad. Sci. U.S.A. 114, 1880 (2017)). Sand und Schotter sind mit 79 % oder 28,6 Gigatonnen im Jahr 2010 der am schnellsten verbrauchte Teil natürlicher Ressourcen vergleichbar mit Biomasse und fossilen Brennstoffen (H. Schandl et al., in "Global Material Flows and Resource Productivity. An Assessment Study of the UNEP International Resource Panel" (U.N. Environment Programme, Paris, 2016), S. 30-34). Auch wenn der Sandabbau reguliert wird, entsteht durch die massive Urbanisierung das Problem des Sandmangels mit starken wirtschaftlichen und ökologischen Auswirkungen (A. Torres et al., Science 357(6355), 970 (2017)). Laut Greenpeace (https://www-dev.greenpeace.org/testiocaste/story/19351/sand-depletion/) wird der Sandverbrauch bis zum Jahr 2060 auf 55 Gigatonnen ansteigen, weshalb zukünftig mit einem Mangel an Sand bzw. Quarzsand und steigenden Kosten zu rechnen sein wird. Wie dargelegt, wird Quarzsand aber als Füllstoff in Gießmassen verwendet.

Der Erfindung liegt damit das Problem zugrunde, eine verbesserte Gießmasse anzugeben.

Zur Lösung des Problems ist erfindungsgemäß eine Gießmasse vorgesehen, dass der Füllstoff gemahlene Fruchtkerne und/oder Fruchtschalen sind, wobei entweder nur der wenigstens eine Füllstoff aus gemahlenen Fruchtkernen und/oder Fruchtschalen oder zusätzlich wenigstens ein weiterer partikulärer anorganischer Füllstoff enthalten ist.

Die Erfindung sieht vor, als Füllstoff gemahlene Fruchtkerne oder Fruchtschalen zu verwendet, entweder als alleinigen Füllstoff oder als teilweisen Ersatz für einen anorganischen Füllstoff wie den bisher verwendeten Quarzsand. Unter einem Fruchtkern wird der harte innere Kern einer Frucht, der mitunter auch als Stein bezeichnet wird, verstanden, unter einer Fruchtschale wird eine harte Außenschale einer Frucht verstanden. Diese Kern- oder Schalenpartikel werden in das Polymerbindemittel eingebracht und sind in der ausgehärteten Polymermatrix fest eingebettet.

Es hat sich überraschend herausgestellt, dass die gemahlenen Fruchtsteine und/oder -schalen in eine solche Gießmasse eingearbeitet werden können, wobei ein hieraus hergestellter Formkörper einerseits hinreichende mechanische, physikalische und chemische Eigenschaften aufweist, die vergleichbar oder sogar besser sind als entsprechende Eigenschaften bisher herstellbarer Formkörper enthaltend Sand bzw. Quarzsand als Füllstoff. Insbesondere ermöglicht die Gießmasse die Herstellung von Formteilen mit einer wenigstens vergleichbaren, in weiten Bereichen auch verbesserten Schlagzähigkeit, verglichen mit einem Formteil ohne einen Gehalt an Kern- oder Schalenpartikeln. Darüber hinaus verleihen die erfindungsgemäß zugegebenen Kern- oder Schalenfüllstoffe der Gießmasse auch Leichtbaueigenschaften, d.h., dass sich letztlich das Gewicht des hergestellten Formkörpers verringert. Die Kern- oder Schalenpartikel können also vorteilhaft allein und damit vollständig ersetzend oder auch zusammen mit anorganischen Füllstoffpartikeln und damit zumindest teilweise ersetzend, und ggf. mit weiteren Additiven, wie z. B. einem Vernetzer, in den polymeren Binder eingemischt und darin homogen verteilt werden. Diese Gießmasse kann auch in geeigneter Weise zu Formkörpern wie z. B. einer Küchenspüle oder einer Duschwanne verarbeitet werden, was durch ein thermisch oder chemisch induziertes Formgebungsverfahren erfolgen kann, bei dem die Gießmasse in eine Form eingefüllt und in der Form zur Polymerisation der Matrix gebracht wird. Überraschenderweise wurde festgestellt, dass sich der organische Füllstoff auf Basis der gemahlenen Fruchtkerne und/oder Fruchtschalen homogen im Formteil verteilt, das sehr gute mechanische, physikalische und chemische Eigenschaften aufweist, insbesondere hinsichtlich der Schlagzähigkeit, und darüber hinaus auch im Gewicht reduziert ist.

Die Kerne und/oder Schalen können problemlos zu einem Granulat oder Pulver verschiedener Größe gemahlen werden. Solches Granulat oder Pulver kann in die Polymerkomposite als eine Verstärkung aus erneuerbaren Ressourcen eingebracht werden. Die Verwendung der Fruchtkerne und/oder -schalen bietet wie beschrieben den Vorteil eines geringeren Gewichts des fertigen Formteils. Die Dichte von z.B. Olivensteinen beträgt mit ca. 1,2 g/cm$^3$ nur die Hälfte der Dichte von Quarzsand, die je nach Struktur zwischen 2,53 bis 2,65 g/cm$^3$ beträgt. Hierdurch kann bei einem fertigen Formteil Gewicht eingespart werden. Dies bietet eine signifikante Erleichterung sowohl bei der Herstellung wie auch der Installation der Formteile vor Ort.

Gemahlene Fruchtkerne und/oder Fruchtschalen sind das Ergebnis einer entsprechenden Aufbereitung von Abfällen aus der Lebensmittelherstellung. Gemahlene Fruchtkerne und/oder Fruchtschalen enthalten viele Komponenten in ganz unterschiedlichen Konzentrationen. Die häufigsten Bestandteile sind Fette, Proteine, Zucker, Cellulose, Hemicellulose, Lignin und aromatische und aliphatische Komponenten (insbesondere Alkohole, Glycoside, Flavonone, Limonoide,Phenole und Phenolalkohole und Säure. Während des Dispersionsprozesses wird die Oberfläche der gemahlenen Fruchtkerne und/oder Fruchtschalen mechanisch oder chemisch behandelt, wobei die lignozellulosehaltigen kurzen Fasern von der Füllstoffoberfläche in die Polymermatrix geleitet werden, was zu einer besseren Kompatibilität und stärkeren Bindung zwischen Füllstoffen und Polymermatrix führt. Dies führt zu sehr guten und im Vergleich zu bekannten Formkörpern mitunter auch verbesserten mechanischen Eigenschaften des Formkörpers. Zusätzlich bewirkt ein kleinerer Gradient im Wärmeausdehnungskoeffizient zwischen gemahlenen Fruchtkernen und/oder Fruchtschalen und der Polymermatrix im Vergleich zu Quarzsand eine bessere Beständigkeit des Formteils gegen Temperaturwechsel.

Fruchtkerne und/oder Fruchtschale sind die festen Abfälle, die beim Verzehr von Früchten anfallen. Allein Spanien produzierte jährlich etwa 400.000 Tonnen Olivenkerne (Rodriguez et al., Bioresource Technology 99, 5261 (2008)). Typischerweise verursachen die Fruchtkern- und/oder Fruchtschalenabfälle Verunreinigungen sowohl im Boden als auch im Wasser. Die Zusammensetzung der Fruchtsteine und/oder -schalen enthält phenolische Verbindungen, die die Qualität von Wasser und Boden beeinträchtigen. Diesem Problem kann durch die Verwendung der Fruchtkerne und/oder Fruchtschalen in Kompositmaterialien begegnet werden. Das heißt, dass neben den Vorteilen, die sich durch die Einbringung in die Gießmasse bzw. Den Formkörper diesbezüglich ergeben, kann durch diese Verwendung auch einem weiteren Umweltproblem begegnet werden und infolge der Abfallverarbeitung die Boden- und Wasserverunreinigung reduziert werden.

Neben der Möglichkeit, dass die Gießmasse nur eine Sorte eines gemahlenen Fruchtkerns oder einer Fruchtschale enthält, kann sie auch ein Gemisch aus mehreren gemahlenen Fruchtkernen oder Fruchtschalen enthalten. Dadurch ist es möglich, durch eine entsprechende Mischung der verschiedenen Kerne oder Schalen, die zum Teil unterschiedliche Eigenschaften, insbesondere chemische Eigenschaften, aufweisen, der Gießmasse und damit dem Formkörper unterschiedliche Eigenschaften zu verleihen.

Verschiedene gemahlene Fruchtkerne oder -schalen bzw. die Vielzahl der gemahlenen Fruchtkerne oder -schalen, die die Mischung bilden, sind vorzugsweise, aber nicht abschließend, ausgewählt aus Olivenkernen, Kirschkernen, Pfirsichkernen, Avocadokernen, Aprikosenkernen, Mangokernen, Pflaumekernen, Mandelschalen, Pistazienschalen, Arganschalen, Walnussschalen, Haselnussschalen.

Die Größe der gemahlenen Partikel aus Fruchtkernen oder Fruchtschalen sollte erfindungsgemäß im Bereich von 0,001 bis 2000 $\mu$m, insbesondere von 0,01 bis 1000 $\mu$m, und bevorzugt von 0,05 bis 800 $\mu$m liegen.

Die Konzentration bzw. der Anteil der gemahlenen Partikel aus Fruchtsteinen oder - schalen oder der Mischung der gemahlenen Partikel aus Fruchtsteinen oder -schalen liegt erfindungsgemäß im Bereich von 44 - 89 Gew.-%. Dies gilt für den Anteil bei Verwendung nur einer Sorte von Kernen oder Schalen wie auch für den Anteil bei Verwendung einer Mischung unterschiedlicher Kerne oder Schalen oder einer Kern-Schalen-Mischung. Der Anteil an polymerem Bindemittel beträgt dementsprechend 11 - 56 Gew.-%, wobei die Summe der jeweiligen Anteile natürlich 100 Gew.-% ergibt. Dabei ist jedes sich aus den angegebenen Intervallen ergebende Mischungsverhältnis als erfindungswesentlich offenbart.

Erfindungsgemäß können nur organische Füllstoffpartikel in Form der zerkleinerten Fruchtkerne oder Fruchtschalen oder entsprechender Gemische in der Gießmasse und auch im fertigen Formkörper enthalten sein. Alternativ ist es erfindungsgemäß auch denkbar, daneben wenigstens ein weiterer partikulären anorganische Füllstoff in die Gießmasse und damit in den Formkörper einzubringen. Es ist dann also ein Gemisch aus organischen und anorganischen Füllstoffpartikeln vorhanden.

Dabei kann der anorganische Füllstoff gewählt sein aus $SiO_2$, $Al_2O_3$, $TiO_2$, $ZrO_2$, $Fe_2O_3$, $ZnO$, $Cr_2O_5$, Kohlenstoff, Metallen oder Metalllegierungen, oder auch eine beliebige Mischung davon sein.

Die anorganischen Füllstoffpartikel sollten eine Partikelgröße von 0,010 bis 8000 $\mu$m, insbesondere 0,05 bis 3000 $\mu$m und vorzugsweise 0,1 bis 1300 $\mu$m aufweisen.

Dabei kann erfindungsgemäß das Verhältnis des oder der Füllstoffe in Form der Fruchtkerne oder Fruchtschalen zu dem oder den anorganischen Füllstoffen im Bereich von 99 : 1 bis 1 : 99 nach Gewicht liegt. Der Anteil der Fruchtkerne oder der Fruchtschalen im Verhältnis zu einem Anteil an anorganischen Füllstoffpartikeln, wenn solche in der Gießmasse zusätzlich vorhanden sind, ist also in weitem Umfang variabel.

Wie beschrieben enthält die erfindungsgemäße Gießmasse, wie auch bisher bekannte Gießmassen, ein polymeres Bindemittel, das im ausgehärteten Zustand eine Polymermatrix bildet, in die die Füllstoffpartikel eingebettet sind. In Weiterbildung der Erfindung. Das polymere Bindemittel ist dabei ein Bindemittel auf Basis von Acrylharz, Polyesterharz, Epoxidharz, Polyphenolharz oder Melaminharz oder eine Mischung wenigstens zweier dieser Harze. Es sind also verschiedene Bindemittel einsetzbar, denen erfindungsgemäß der organische Füllstoff aus den Fruchtkernen oder -schalen zugemischt wird.

Auch kann die Gießmasse einen Vernetzer enthalten. Dabei kann der Anteil des Vernetzers mindestens 2 Gew.-% bezogen auf den Anteil des Monomers des Bindemittels, insbesondere mindestens 5 Gew.-%, vorzugsweise mindestens 10 Gew.-%, und besonders bevorzugt zwischen 20-30 Gew.-% betragen.

Eine weitere Alternative sieht eine weitestgehend biologische bzw. biobasierte aushärtbare Gießmasse vor, umfassend:

(a) ein oder mehrere mono- und ein oder mehrere polyfunktionelle Acryl- und/oder Methacryl-Biomonomere pflanzlichen oder tierischen Ursprungs

(b) ein oder mehrere Polymere oder Copolymere gewählt aus Polyacrylaten, Polymethacrylaten, Polyolen, Polyestern aus recyceltem Material oder pflanzlichen oder tierischen Ursprungs,

(c) Füllstoffpartikel aus gemahlenen Fruchtkernen und/oder Fruchtschalen oder eine Mischung aus Füllstoffpartikel aus gemahlenen Fruchtkernen und/oder Fruchtschalen und anorganischen Füllstoffpartikeln,

wobei die Bestandteile a) und b) das polymere Bindemittel bilden, und

der Anteil des oder der mono- und polyfunktionellen Acryl- und Methacryl-Biomonomere 10 - 40 Gew.-%, der Anteil des oder der Polymere oder Copolymere 1 - 16 Gew.-% und der Anteil der Füllstoffpartikel, seien es nur Füllstoffpartikel aus gemahlenen Fruchtkernen und/oder Fruchtschalen, sei es eine Mischung aus gemahlenen Fruchtkernen und/oder Fruchtschalen mit anorganischen Füllstoffpartikeln, 44 - 89 Gew.-% beträgt.

Diese erfindungsgemäße Gießmasse zeichnet sich neben dem oder den gemahlenen Fruchtkernen und/oder Fruchtschalen dadurch aus, dass sie zu einem Großteil, wenn nicht sogar zu 100%, aus biologischen bzw. natürlichen Materialien insbesondere in Bezug auf die verwendeten, sich vernetzenden Stoffe besteht. So sind erfindungsgemäß die verwendeten mono- und polyfunktionellen Acryl- und Methacryl- Bio-Monomere ausschließlich pflanzlichen oder tierischen Ursprungs. Hier kommen also keine petrochemisch gewonnenen Polymere zum Einsatz. Ein Bio-Monomer ist ein Monomer eines Bio-Polymers. Der Begriff "polyfunktionell" umfasst bi-, tri- und höherfunktionelle Bio-Monomere.

Die verwendeten Polymere oder Copolymere sind vorzugsweise ebenfalls rein pflanzlichen oder tierischen Ursprungs, d.h., dass auch diese Stoffe nicht petrochemischen Ursprungs sind. Hier besteht jedoch alternativ zur Verwendung von Stoffen pflanzlichen/tierischen Ursprungs auch die Möglichkeit, Polymere oder Copolymere aus Recyclingmaterial zu verwenden. Zwar ist dieses Material zumeist petrochemischen Ursprungs, jedoch wird kein Neumaterial verwendet, sondern ein bereits vorhandenes, jedoch recyceltes Material wiederverwendet, was aus Umweltgesichtspunkten ebenfalls vorteilhaft ist. Da die Bio-Monomere neben den verwendeten anorganischen Füllstoffen, die ebenfalls natürlichen Ursprungs sind, den größeren Anteil auf der Polymerseite ausmachen, ist innerhalb der erfindungsgemäßen Gießmasse selbst bei Verwendung von Recyclingmaterial ein Großteil bisheriger verwendeter Stoffe auf petrochemischer Basis durch Bio-Material in Form der Bio-Monomere ersetzt. Bevorzugt natürlich werden auch Polymere bzw. Copolymere rein pflanzlichen oder tierischen Ursprungs verwendet, so dass sich in diesem Falle eine zu 100% auf natürlichen Materialien bestehende Gießmasse ergibt, da wie beschrieben auch die Füllstoffe rein natürlichen Ursprungs sind. Damit handelt es sich bei dem aus der erfindungsgemäßen Gießmasse hergestellten Formkörper folglich um einen Bio-Formkörper, der überwiegend oder vorzugsweise vollständig aus biologischen, also natürlichen Materialien besteht. Die Herstellung des Bio-Verbundwerkstoffe aus den Füllstoffpartikeln und den sich vernetzenden Materialien, die aus erneuerbaren Quellen hergestellt werden, reduziert den Verbrauch der petrochemisch hergestellten Materialien und damit den Erdölverbrauch und wirkt sich positiv auf die Umwelt aus. Eine solche Gießmasse, jedoch ohne Zusatz gemahlener Fruchtkerne und/oder Fruchtschalen, ist aus DE 10 2019 125 777 A1 bekannt. In dieser Gießmasse kann nun erfindungsgemäß der bisher vorhandene Anteil an anorganischen Füllstoffen, also z.B. des Quarzsands, vollständig, zumindest aber teilweise, durch die gemahlenen Füllstoffpartikel aus den Fruchtkernen und/oder Fruchtschalen ersetzt werden.

Da in gemahlenen Fruchtkernen oder Fruchtschalen organische Substanzen wie Fett, Proteine, Zuckern, Cellulose, Hemicellulose, Lignin in ganz unterschiedlichen Konzentrationen enthalten sind, ist folglich auch der Füllstoffanteil biobasiert und fügt sich daher bestens in diesen biologischen Ansatz dieser Gießmasse ein.

Trotz Verwendung von überwiegend oder ausschließlich natürlichen Materialien einschließlich des Anteils an gemahlenen Fruchtkernen oder Fruchtschalen zur Herstellung der Gießmasse bzw. des Formkörpers, also z.B. einer Küchenspüle, hat sich überraschend herausgestellt, dass der Formkörper sehr gute, teilweise sogar noch bessere mechanische Eigenschaften, insbesondere hinsichtlich der Schlagzähigkeit oder der Kratzfestigkeit im Vergleich mit einer bekannten, aus petrochemisch gewonnenen vernetzenden Materialien hergestellten Gießmasse bzw. einem derartigen Formkörper zeigt. Hinzu kommt die ausgeprägte Gewichtreduzierung, die sich aus der deutlich geringeren Dichte der gemahlenen Fruchtsteine oder -schalen in der Gießmasse und damit des Formteils ergibt.

Eine weitere Variante einer Gießmasse umfasst, neben dem Anteil an gemahlenen Fruchtsteinen oder -schalen:

(a) ein oder mehrere mono- und ein oder mehrere polyfunktionelle Acryl- und/oder Methacryl-Biomonomere aus recyceltem oder pflanzlichem oder tierischem Ursprung

(b) ein oder mehrere Polymere oder Copolymere gewählt aus Polyacrylaten, Polymethacrylaten, Polyolen, Polyestern aus recyceltem Material oder pflanzlichen oder tierischen Ursprungs,

(c) Füllstoffpartikel aus gemahlenen Fruchtkernen und/oder Fruchtschalen oder eine Mischung aus Füllstoffpartikel aus gemahlenen Fruchtkernen und/oder Fruchtschalen und anorganischen Füllstoffpartikeln,

wobei die Bestandteile a) und b) das polymere Bindemittel bilden und

der Anteil des oder der mono- und polyfunktionellen Acryl- und Methacryl-Biomonomere 10 - 40 Gew.-%, der Anteil des oder der Polymere oder Copolymere 1 - 16 Gew.-% und der Anteil der Füllstoffpartikel, seien es nur Füllstoffpartikel aus gemahlenen Fruchtkernen und/oder Fruchtschalen, sei es eine Mischung aus gemahlenen Fruchtkernen und/oder Fruchtschalen mit anorganischen Füllstoffpartikeln, 44 - 89 Gew.-% beträgt.

Dieser weitere erfindungsgemäße Gießmassenansatz zeichnet sich dadurch aus, dass sie zu einem Großteil aus biologischen bzw. natürlichen Materialien insbesondere in Bezug auf die verwendeten, sich vernetzenden Stoffe besteht. Erfindungsgemäß wird eine Mischung aus verschiedenen monofunktionellen Monomeren verwendet. Erfindungsgemäß besteht die verwendete Mischung der monofunktionellen Acryl- und Methacryl-Monomere zu einem Teil aus recyceltem Material und zu einem Teil aus Monomeren pflanzlichen oder tierischen Ursprungs, wobei mindestens ein Monomer aus recyceltem und mindestens ein Monomer biobasiert ist, also pflanzlichen oder tierischen Ursprungs ist. Hier kommen also kaum petrochemisch gewonnene Polymere zum Einsatz, abgesehen von dem recycelten Anteil, der aber auch gegebenenfalls aus recyceltem biobasiertem Material besteht. In jedem Fall wird im Umfang des recycelten monofunktionellen Monomeranteils kein petrochemisch basiertes Neumaterial verwendet. Als polyfunktionelle Monomere werden ausschließlich Monomere pflanzlichen oder tierischen Ursprungs verwendet. Soweit Monomere, seien es monofunktionelle oder polyfunktionelle Monomere, pflanzlichen oder tierischen Ursprungs verwendet werden, können diese als "Bio-Monomere" bezeichnet, werden, wobei ein Bio-Monomer ein Monomer eines Bio-Polymers ist. Der Begriff "polyfunktionell" umfasst bi-, tri- und höherfunktionelle Bio-Monomere.

Eine weitere Variante einer Gießmasse umfasst, neben dem Anteil an gemahlenen Fruchtsteinen oder -schalen:

(a) einen ungesättigten Polyester aus einerseits einer Dicarbonsäure und/oder einem entsprechenden Anhydrid und andererseits aus einem Diol im molaren Verhältnis 1,25:1 bis 0,75:1, wobei die Dicarbonsäure und/oder das Anhydrid wenigstens teilweise mit einer radikalisch reaktiven Doppelbindung funktionalisiert sind,

(b) Styrolderivat als Reaktivverdünner,

(c) Füllstoffpartikel aus gemahlenen Fruchtkernen und/oder Fruchtschalen oder eine Mischung aus Füllstoffpartikel aus gemahlenen Fruchtkernen und/oder Fruchtschalen und anorganischen Füllstoffpartikeln,

wobei die Bestandteile a) und b) das polymere Bindemittel bilden und

der Anteil des oder der polymere Bindemittel 11 - 56 Gew.-% und der Anteil der Füllstoffpartikel, seien es nur Füllstoffpartikel aus gemahlenen Fruchtkernen und/oder Fruchtschalen, sei es eine Mischung aus gemahlenen Fruchtkernen und/oder Fruchtschalen mit anorganischen Füllstoffpartikeln, 44 - 89 Gew.-% beträgt.

Eine solche Gießmasse, jedoch ohne Zusatz gemahlener Fruchtkerne und/oder Fruchtschalen, ist aus EP 2 951 245 B1 bekannt. Diese Gießmasse kann nun erfindungsgemäß um gemahlene Füllstoffpartikel aus den Fruchtkernen und/oder Fruchtschalen oder zusätzlich um wenigstens einen weiteren partikulären anorganischen Füllstoff angereichert werden bzw. können die gemahlenen Füllstoffpartikel etwaige vorhandene Füllstoffe teilweise oder vollständig ersetzen.

Die erfindungsgemäße Gießmasse sollte grundsätzlich eine Viskosität aufweisen, die das Einspritzen in eine Form erlaubt. Die Viskosität sollte zwischen 1000 - 20000 cPs, vorzugsweise zwischen 1500 - 15000 cPs und insbesondere zwischen 2000 - 12000 cPs betragen.

Neben der erfindungsgemäßen Gießmasse betrifft die Erfindung ferner einen Formkörper, hergestellt unter Verwendung einer erfindungsgemäßen aushärtbaren Gießmasse wie vorstehend beschrieben. Je nach verwendeter Gießmasse hinsichtlich der Massekomponenten kann ein mehr oder weniger stark biobasierter Formkörper hergestellt werden. Wird eine biobasierte Gießmasse verwendet, kann sogar ein zu 100% aus natürlichen, biologischen Stoffen bestehender Formkörper, folglich ein Bio-Kompositkörper, also z.B. eine Bio-Komposit-Küchenspüle o.dgl. hergestellt werden.

Dabei können unterschiedliche Formkörpertypen hergestellt werden. So kann es sich bei dem Formkörper um eine Küchenspüle, eine Duschwanne, ein Waschtisch, eine Badewanne, eine Arbeitsplatte oder ein Boden-, Wand- oder Deckenpaneel handeln, wobei diese Aufzählung nicht abschließend ist.

Der Ersatz der hochdichten, anorganischen Füllstoffe durch leichte, gemahlene Fruchtsteine und -schalen führt zur Gewichtsreduzierung der Formkörper als Küchenspüle, Waschbecken, Duschwanne oder Badewanne.

Ferner betrifft die Erfindung ein Verfahren zur Herstellung eines Formkörpers der vorstehend beschriebenen Art, bei dem eine Gießmasse der ebenfalls vorstehend beschriebenen Art verwendet wird, die in eine Form gegeben wird, in der es bei Raumtemperatur oder durch eine Wärmezufuhr aushärtet, wonach der ausgehärtete Formkörper aus der Form entfernt wird. Für den Fall, dass eine wärmeinduzierte Aushärtung erfolgt, was unter anderem von dem verwendeten polymeren Bindemittel abhängt, sollte die Temperatur während der wärmeinduzierten Aushärtung zwischen 60 - 140 °C, vorzugsweise zwischen 75 - 130 °C und insbesondere 80 -110 °C betragen.

Ferner sollte die Haltezeit, während der die Gießmasse zur wärmeinduzierten Polymerisation in der Form bleibt, zwischen 15 - 50 min, vorzugsweise 16 - 45 min und insbesondere 17 - 35 min betragen.

In der vorliegenden Erfindung weisen die Küchenspülen oder Sanitärartikel im Material der Gießmasse einen Gehalt an gemahlenen Fruchtsteine und/oder Schale in einer Konzentration von 0,05 Gew.-% oder höher, bis maximal 75 Gew.% auf.

Nachfolgend werden einige Beispiele für die Eigenschaften der erfindungsgemäßen Gießmasse und der damit hergestellten erfindungsgemäßen Formkörper gegeben.

**Beispiel 1:**

Tabelle 1: Zusammensetzung von grau eingefärbten Küchenspülen ohne und mit gemahlenen Olivensteinen mit den verschiedenen Konzentrationen (Angaben in Gew.-%)

| | Vergleichs-Formkörper | Erfindungsgemäße Formteile | | | | | | | | |
|---|---|---|---|---|---|---|---|---|---|---|
| | | 1 | 2 | 3 | 4 | 5 | 6 | 7 | 8 | 9 |
| Recyceltes Acrylharz* | 25,0 | 25,0 | 25,0 | 25,0 | 25,0 | 25,0 | 25,0 | 25,0 | 25,0 | 25,0 |
| Biobasiertes Methacrylatmonomere** | 2,0 | 2,0 | 2,0 | 2,0 | 2,0 | 2,0 | 2,0 | 2,0 | 2,0 | 2,0 |
| Füllstoff Quarzsand, 0,05 - 0,3 mm, Dorfner GmbH | 69,0 | 67,5 | 63,0 | 60,0 | 55,0 | 47,0 | 29,0 | 24,0 | 17,0 | 0,0 |
| Olivenkerngranulat, 0,05 - 0,8 mm, Schilling Ltd. | - | 1,5 | 6,0 | 9,0 | 14 | 22 | 40 | 45,0 | 52,0 | 69,0 |
| Micronisiertes Biopolymer, Münzing GMBH | 0,3 | 0,3 | 0,3 | 0,3 | 0,3 | 0,3 | 0,3 | 0,3 | 0,3 | 0,3 |
| 1,10 Decandioldimethacrylat, Arkema | 1,0 | 1,0 | 1,0 | 1,0 | 1,0 | 1,0 | 1,0 | 1,0 | 1,0 | 1,0 |
| Peroxide, Pergan GmbH | 0,6 | 0,6 | 0,6 | 0,6 | 0,6 | 0,6 | 0,6 | 0,6 | 0,6 | 0,6 |
| Naturpigment, Kreidezeit Naturfarben GmbH | 2,0 | 2,0 | 2,0 | 2,0 | 2,0 | 2,0 | 2,0 | 2,0 | 2,0 | 2,0 |

(fortgesetzt)

| | Vergleichs-Formkörper | Erfindungsgemäße Formteile | | | | | | | | |
|---|---|---|---|---|---|---|---|---|---|---|
| | | 1 | 2 | 3 | 4 | 5 | 6 | 7 | 8 | 9 |
| Biobasiertes Thixotropieadditiv, Ashland | 0,1 | 0,1 | 0,1 | 0,1 | 0,1 | 0,1 | 0,1 | 0,1 | 0,1 | 0,1 |

| |
|---|
| *Recyceltes Acrylharz ist eine Lösung der recyceltes PMMA (Kunststoff- und Farben-GmbH) in recyceltem Methylmethacrylat (Monomeros des Valles) mit der Viskosität 120 -155 cPs. <br> **Die Mischung von biobasierten Isobornyl-Methacrylat (Evonik Performance Materials GmbH) und biobasierten Ethyl-Methacrylat (BCH Brühl-Chemikalien Handel GmbH) |

Die Mischung zur Herstellung der Polymermatrix wird durch Lösen des Polymers in den Monomeren hergestellt. Für die erfindungsgemäßen Formteile wird zusätzlich die entsprechende Menge der gemahlenen Olivenkerne mit dem Vernetzer unter Rühren für 30 min eingebracht. Die jeweils fertige Gießmasse wird in eine Gießform zur Herstellung von Formteilen in Form von einfachen Küchenspülen mit einem Becken mit Spülenboden und umlaufenden Seitenwänden sowie einer seitlichen Ablagefläche, eingebracht und die Polymerisation erfolgt thermisch induziert. Ausgehend von einer Umgebungstemperatur wird das Material in einer Form, wie in der Patentanmeldung DE 10 2020 119 386.6 beschrieben, erhitzt, ausgehärtet und nach erfolgter Aushärtung entformt.

Tabelle 2: Mechanische & thermische Eigenschaften der Vergleichs-Formteile und der Formteile aus den Muster 1 - 9.

| EIGENSCHAFTEN | Vergleichs-Formkörper | Muster 1 | Muster 2 | Muster 3 | Muster 4 | Muster 5 | Muster 6 | Muster 7 | Muster 8 | Muster 9 |
|---|---|---|---|---|---|---|---|---|---|---|
| Temperaturwechselbeständigkeit | OK | OK | OK | OK | OK | OK | OK | OK | OK | OK |
| Schlagzähigkeit, mJ/mm$^2$ | 2,8 | 2,8 | 2,9 | 3 | 3,1 | 3,4 | 3,3 | 3,3 | 3,2 | 3,5 |
| Kratzfestigkeit | OK | OK | OK | OK | OK | OK | OK | OK | OK | OK |
| Abriebbeständigkeit | OK | OK | OK | OK | OK | OK | OK | OK | OK | OK |
| Spülengewicht, kg | 13,6 | 13,2 | 12,9 | 12,6 | 12,1 | 11,7 | 11,3 | 11 | 10,7 | 9,8 |
| BCI Anteil | 7,6 | 11,8 | 22,2 | 27,8 | 35,6 | 45,1 | 58,8 | 61,4 | 64,6 | 77,6 |

Die Prüfungen wurden wie folgt durchgeführt (dies gilt auch für alle weiteren, nachfolgend angegebenen Beispiele, sofern der jeweilige Test erfolgte):
Temperaturwechselbeständigkeitsprüfung basierend auf der Prüfvorschrift DIN EN 13310, bei der die Spüle für 1000 Zyklen abwechselnd mit kaltem und heißem Wasser behandelt wird. Heißes Wasser (T=90 °C) fließt 90 Sekunden lang in die Spüle, gefolgt von einer Entspannung für 30 Sekunden, mit weiter fließendem Kaltwasser (T= 15 °C) für die nächsten 90 Sekunden. Der Zyklus wird durch eine Entspannung für 30 Sekunden beendet.

Für die Schlagzähigkeit-Messungen werden 12 Proben der Größe 80 x 6 mm aus dem Formkörper geschnitten. Die Messungen wurden basierend auf der Prüfvorschrift DIN EN ISO 179-2 am Pendelschlagprüfgerät ZwickRoell HIT P Gerät durchgeführt.

Für die Kratzfestigkeit-Messungen wurde jeweils eine Probe (100 x 100 mm) aus dem entsprechenden Formkörper geschnitten. Anschließend wird die Sichtseite mittels einer mit 1 N - 6 N belasteten Diamantspitze eingebaut in einem Erichsen Kratztest-Gerät angekratzt. Die Topografie wurde vor und nach dem Kratzen gemessen (Mitutoyo Surftest SJ 500P).

Für den Abriebbeständigkeitstest wurde jeweils eine Probe (100 x 100 mm) geschnitten. Mittels eines Taber - Abriebprüfgeräts der Fa. Frank wird die Prüfung basierend auf Prüfvorschrift DIN EN 13310 durchgeführt und der Abrieb über den Gewichtsverlust nach 100 Umdrehungen bestimmt.

Der BCI (Bio Carbon Index, %) der chemischen Komponenten wird nach der folgenden Formel berechnet

$$BCI = 100 \times (BRC / C)$$

wobei BCI = biologisch erneuerbarer Kohlenstoffindex in %
BRC = Menge an biologisch erneuerbarem Kohlenstoff
C = Gesamtkohlenstoffmenge

Zerkleinerte Fruchtkerne und Fruchtschalen sind organische Substanzen, bei denen Zellulose, Hemizellulose und Lignin die wichtigsten chemischen Bestandteile sind. Es ergibt sich ein Kohlenstoffgehalt von 100 % in den Steinen. Mit der Erhöhung des Anteils an gemahlenen Fruchtkerne und Fruchtschalen in der Rezeptur erhöhen wir also den Anteil an biobasiertem Kohlenstoff.

Bei dieser Testreihe wurde ausgehend von einem Vergleich-Formkörper der Quarzsandanteil zunehmend durch Olivenkerngranulat ersetzt, während die sonstigen Gießmassenbestandteile gleich bleiben.

Es zeigt sich, dass mit zunehmendem Anteil an gemahlenen Olivenkernen und entsprechend abnehmendem Anteil an Quarzsand die Schlagzähigkeit zunimmt. Während die Schlagzähigkeit bei der Vergleichs-Formkörper 2,8 mJ/mm$^2$ beträgt, nimmt die Schlagzähigkeit mit zunehmendem Anteil an Olivenkernpartikeln bis maximal 3,5 mJ/mm$^2$ zu, das Muster 9, bei dem der Quarzsand vollständig durch Fruchtkerngranulat ersetzt ist, zeigt den höchsten Wert.

Ebenso eindeutig ist die Gewichtsabnahme mit zunehmendem Gehalt an gemahlenen Olivenkernen. Während der Vergleichs-Formkörper ein Gewicht von 13,6 kg aufweist, beträgt das Gewicht des Formkörpers nach Muster 9 nur noch 9,8 kg, d.h., dass eine Abnahme von 3,8 kg gegeben ist, bei identischer Form.

Auch alle anderen Prüfergebnisse sind positiv.

**Beispiel 2:**

Tabelle 3: Zusammensetzung von Formteilen ohne und mit gemahlenen Olivenkernsteinen mit unterschiedlichen Olivensteingrößen (Angaben in Gew.-%)

| | Vergleichs-Formkörper | Erfindungsgemäßer Formkörper | |
|---|---|---|---|
| | | Muster 10 | Muster 11 |
| Recyceltes Acrylharz* | 23 | 23 | 23 |
| Biobasiertes Methacrylatmonomere** | 4 | 4 | 4 |
| Füllstoff Quarzsand 0,05 - 0,3 mm, Dorfner GmbH | 69 | 57 | 57 |
| Olivensteingranulat 0,01 - 0,1 mm, Schilling Ltd. | - | 12 | |

(fortgesetzt)

|  | Vergleichs-Formkörper | Erfindungsgemäßer Formkörper | |
|---|---|---|---|
|  |  | Muster 10 | Muster 11 |
| Olivenkerngranulat 0,3 -0,6 mm. Schilling Ltd |  |  | 12 |
| 1,10 Decandioldimethacrylat, Arkema | 2,2 | 2,2 | 2,2 |
| Micronisierte Biopolymer, Münzing GMBH | 0,3 | 0,3 | 0,3 |
| Peroxide, Pergan GmbH | 0,6 | 0,6 | 0,6 |
| Biobasiertes Pigment, Orion Engineering Carbon | 0,8 | 0,8 | 0,8 |
| Ethyl Cellulose, Ashland | 0,1 | 0,1 | 0,1 |

*Recyceltes Acrylharz ist eine Lösung aus recyceltem PMMA (Kunststoff- und Farben-GmbH) in recyceltem Methylmethacrylat (Monomeros des Valles) mit der Viskosität 120 -155 cPs.

**Die Mischung aus biobasiertem Isobornyl-Methacrylat (Evonik Performance Materials GmbH) und biobasiertem Ethyl-Methacrylat (BCH Brühl-Chemikalien Handel GmbH)

Tabelle 4: Mechanische & thermische Eigenschaften des Vergleichs-Formteils und der erfindungsgemäßen Formteile

| EIGENSCHAFTEN | Vergleichs-Formkörper | Erfindungsgemäßer Formkörper | |
|---|---|---|---|
|  |  | Muster 10 | Muster 11 |
| Temperaturwechselbeständigkeit | OK | OK | OK |
| Schlagzähigkeit, mJ/mm$^2$ | 3,0 | 3,6 | 4,5 |
| Kratzfestigkeit | OK | OK | OK |
| Abriebbeständigkeit | OK | OK | OK |

Die Testreihe zeigt, dass unabhängig von der Größe der zugegebenen Fraktion an Olivenkernfüllstoff eine Zunahme der Schlagzähigkeit zu verzeichnen ist. Jedoch zeigt sich, dass die Schlagzähigkeit auch von der Fraktionsgröße abhängig ist. Während bei einer Zugabe von Olivenkerngranulat mit einer Größe von 0,01 - 0,1 mm, das im Vergleich zum Vergleichs-Formkörper den Quarzsand anteilig ersetzt, eine Zunahme der Schlagzähigkeit von 0,6 mJ/mm$^2$, nämlich von 3,0 mJ/mm$^2$ bei dem kein Olivenkernfüllstoff aufweisenden Vergleichs-Formkörper auf 3,6 mJ/mm$^2$ beim Muster 10 festzustellen ist, hat sich die Schlagzähigkeit bei Zugabe von Olivenkerngranulat mit einer Größe von 0,3 - 0,6 mm um 1,5 mJ/mm$^2$, also auf 4,5 mJ/mm$^2$ erhöht.

Der Grund für die erhöhte Schlagzähigkeit des Musters 11 im Vergleich zum Muster 4, das eine ähnliche Zusammensetzung hat, liegt in den etwas geänderten Anteilen des recycelten Acrylharzes und der Methacrylatmonomers. Auch die Zugabe des Vernetzers beim Muster 11 wirkt sich schlagzähigkeitserhöhend aus, da der flexible Vernetzer eine sehr gute Affinität zur Lignocellulose-Oberfläche der Fruchtkernpartikel aufweist. Und schließlich weist das Muster 4 einen höheren Anteil an sehr feinem Fruchtkerngranulat beginnend mit einer Größe von 0,05 μm auf, verglichen mit Muster 11, das ein Granulat mit der kleinsten Größe von 0,3 μm enthält.

**Beispiel 3:**

Im Beispiel 3 wurden in den Rezepturen der bekannten Marken CRISTADUR® und CRISTALITE® der Anmelderin jeweils 10 Gew.-% des Quarzfüllstoffs, bezogen auf das Gesamtgewicht der Spüle, durch gemahlene Olivenkerne (0,1 - 600 μm) substituiert. Vergleichsspülen und Spülen der Erfindung wurden unter identischen Bedingungen und in den jeweils gleichen Formen hergestellt. CRISTADUR®-Küchenspülen wurden in der Farbe "Stone" und in der Form Mono D-100L hergestellt. CRISTALITE® wurde in der Farbe "Bisques" und in der Form Primus D-100L hergestellt.

Tabelle 5: Mechanische & thermische Eigenschaften der Vergleichs-Formteile und der erfindungsgemäßen Formteile

| EIGENSCHAFTEN | Vergleichs-Formkörper | | Erfindungsgemäßer Formkörper | |
|---|---|---|---|---|
| | CRISTALITE® | CRISTADUR® | Muster 12 (CRISTALITE®-Basis) | Muster 13 (CRISTADUR®-Basis) |
| Temperaturwechselbeständigkeit | OK | OK | OK | OK |
| Schlagzähigkeit, mJ/mm$^2$ | 2,0 | 2,4 | 2,8 | 2,5 |
| Kratzfestigkeit | OK | OK | OK | OK |
| Abriebbeständigkeit | OK | OK | OK | OK |
| Spülengewicht, kg | 15,4 | 16,2 | 14,3 | 15,0 |

Hier wurden zwei erfindungsgemäß hergestellte Formkörper mit jeweils verschiedenen Zusammensetzungen, jedoch jeweils einem vergleichbaren Anteil an Quarzsand und Olivenkerngranulat mit zwei Formkörpern, die gemäß Angaben im Stand der Technik hergestellt wurden, verglichen. Es zeigt sich, dass die erfindungsgemäßen Formkörper höhere Schlagzähigkeitswerte als die bekannten Formkörper aufweisen.

**Patentansprüche**

1. Aushärtbare Gießmasse, mit einem polymeren Bindemittel und wenigstens einem darin eingebrachten, partikulärem Füllstoff, **dadurch gekennzeichnet, dass** der Füllstoff gemahlene Fruchtkerne und/oder Fruchtschalen sind, wobei entweder nur der wenigstens eine Füllstoff aus gemahlenen Fruchtkernen und/oder Fruchtschalen oder zusätzlich wenigstens ein weiterer partikulärer anorganischer Füllstoff enthalten ist.

2. Aushärtbare Gießmasse nach Anspruch 1, **dadurch gekennzeichnet, dass** eine Füllstoffmischung aus mehreren unterschiedlichen gemahlenen Fruchtkernen oder Fruchtschalen eingebracht ist.

3. Aushärtbare Gießmasse nach Anspruch 1 oder 2, **dadurch gekennzeichnet, dass** der oder die Füllstoffe gewählt sind aus Olivenkernen, Aprikosenkernen, Pfirsichkernen, Mangokernen, Mandelschalen, Pistazienschalen, Avocadokernen, Arganschalen, Walnussschalen, Kirschkernen, Pflaumenkernen.

4. Aushärtbare Gießmasse nach einem der vorhergehenden Ansprüche, **dadurch gekennzeichnet, dass** der oder die Füllstoffe eine Partikelgröße von 0,001 - 2000 $\mu$m, insbesondere von 0,01 bis 1000 $\mu$m, und vorzugsweise von 0,05 bis 800 $\mu$m aufweisen.

5. Aushärtbare Gießmasse nach einem der vorhergehenden Ansprüche, **dadurch gekennzeichnet, dass** der Anteil des polymeren Bindemittels 11 - 56 Gew.-% und der Anteil des oder der Füllstoffe 44 - 89 Gew.-%beträgt.

6. Aushärtbare Gießmasse nach einem der vorangehenden Ansprüche, **dadurch gekennzeichnet, dass** der anorganische Füllstoff gewählt ist aus $SiO_2$, $Al_2O_3$, $TiO_2$, $ZrO_2$, $Fe_2O_3$, ZnO, $Cr_2O_5$, Kohlenstoff, Metallen oder Metalllegierungen oder Mischungen davon.

7. Aushärtbare Gießmasse nach einem der vorangehenden Ansprüche, **dadurch gekennzeichnet, dass** die anorganischen Füllstoffpartikel eine Partikelgröße von 0,010 bis 8000 $\mu$m, insbesondere 0,05 bis 3000 $\mu$m und vorzugsweise 0,1 bis 1300 $\mu$m aufweisen.

8. Aushärtbare Gießmasse nach einem der vorangehenden Ansprüche, **dadurch gekennzeichnet, dass** das Verhältnis des oder der Füllstoffe in Form der Fruchtkerne oder Fruchtschalen zu dem oder den anorganischen Füllstoffen im Bereich von 99 : 1 bis 1 : 99 nach Gewicht liegt.

9. Aushärtbare Gießmasse nach einem der vorhergehenden Ansprüche, **dadurch gekennzeichnet, dass** das polymere Bindemittel ein Bindemittel auf Basis von Acrylharz, Polyesterharz, Epoxidharz, Polyphenolharz oder Melaminharz oder eine Mischung wenigstens zweier dieser Harze ist.

10. Aushärtbare Gießmasse nach einem der vorangehenden Ansprüche, **dadurch gekennzeichnet, dass** sie eine Viskosität von 1000 - 20000 cPs, vorzugsweise von 1500 - 15000 cPs und insbesondere von 2000 - 12000 cPs aufweist, die das Einspritzen in eine Form erlaubt.

11. Formkörper, hergestellt unter Verwendung einer aushärtbaren Gießmasse nach einem der vorangehenden Ansprüche.

12. Formkörper nach Anspruch 11, wobei der Formkörper eine Küchenspüle, eine Duschwanne, ein Waschtisch, eine Badewanne, eine Arbeitsplatte oder ein Boden-, Wand- oder Deckenpaneel ist.

13. Verfahren zur Herstellung eines Formkörpers nach Anspruch 11 oder 12, bei dem eine Gießmasse nach einem der Ansprüche 1 bis 10 verwendet wird, die in eine Form gegeben wird, in der sie polymerisiert, wonach der polymerisierte Formkörper der Form entnommen wird.

Europäisches Patentamt
European Patent Office
Office européen des brevets

## EUROPÄISCHER RECHERCHENBERICHT

**Nummer der Anmeldung**

EP 21 20 7134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 292 628 A2 (STAVRAKELLIS PANAYIOTIS) 30. November 1988 (1988-11-30) * Ansprüche 1,3,8 * * Spalte 5, Zeile 18 – Zeile 25 * * Zeile 45, Absatz 5 – Zeile 3, Absatz 6 * ----- | 1-13 | INV. C08K11/00 C08L97/02 C04B18/24 C04B26/02 B29C39/02 |
| X | DE 10 2008 026266 A1 (HENKEL AG & CO KGAA [DE]) 3. Dezember 2009 (2009-12-03) * Ansprüche 1,10-14 * * Absatz [0014] * * Absatz [0050] * * Absatz [0058] – Absatz [0060] * ----- | 1-13 | B29C67/24 B29C70/60 |
| X | EP 3 643 751 A1 (ALJBEIRI OMAR [IL]) 29. April 2020 (2020-04-29) * Ansprüche 1-14 * * Absatz [0078] – Absatz [0085] * ----- | 1-13 | |
| X | WO 2013/049499 A1 (GEORGIA PACIFIC CHEMICALS LLC [US]) 4. April 2013 (2013-04-04) * Ansprüche 1-20 * * Absatz [0078] – Absatz [0085] * ----- | 1-13 | |

**RECHERCHIERTE SACHGEBIETE (IPC)**

C08K
C09J
C08L
C04B
B29C

Der vorliegende Recherchenbericht wurde für alle Patentansprüche erstellt

| Recherchenort | Abschlußdatum der Recherche | Prüfer |
|---|---|---|
| Den Haag | 19. Mai 2022 | Costantini, Nicola |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

# EP 4 086 305 A1

## ANHANG ZUM EUROPÄISCHEN RECHERCHENBERICHT
## ÜBER DIE EUROPÄISCHE PATENTANMELDUNG NR.

EP 21 20 7134

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2022

| Im Recherchenbericht angeführtes Patentdokument | Datum der Veröffentlichung | Mitglied(er) der Patentfamilie | Datum der Veröffentlichung |
|---|---|---|---|
| EP 0292628 A2 | 30-11-1988 | EP 0292628 A2 | 30-11-1988 |
| | | GR 870818 B | 02-06-1987 |
| DE 102008026266 A1 | 03-12-2009 | KEINE | |
| EP 3643751 A1 | 29-04-2020 | KEINE | |
| WO 2013049499 A1 | 04-04-2013 | BR 112014007780 A2 | 11-04-2017 |
| | | CA 2849907 A1 | 04-04-2013 |
| | | CL 2014001052 A1 | 14-11-2014 |
| | | EP 2760931 A1 | 06-08-2014 |
| | | US 2013085211 A1 | 04-04-2013 |
| | | US 2016024284 A1 | 28-01-2016 |
| | | WO 2013049499 A1 | 04-04-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3832351 A1
- DE 102004055365 A1
- DE 102019125777
- DE 1020191251777
- DE 102019125777 A1
- EP 2951245 B1
- DE 102020119386

**In der Beschreibung aufgeführte Nicht-Patentliteratur**

- **KRAUSMANN et al.** *Proc. Natl. Acad. Sci. U.S.A.,* 2017, vol. 114, 1880
- **H. SCHANDL et al.** Global Material Flows and Resource Productivity. An Assessment Study of the UNEP International Resource Panel. U.N. Environment Programme, 2016, 30-34
- **A. TORRES et al.** *Science,* 2017, vol. 357 (6355), 970
- **RODRIGUEZ et al.** *Bioresource Technology,* 2008, vol. 99, 5261